# EUROPÄISCHE PATENTSCHRIFT

(11) **EP 1 212 587 B1**
(45) Veröffentlichungstag und Bekanntmachung des Hinweises auf die Patenterteilung: **17.12.2003**
(21) Anmeldenummer: 00965988.9
(22) Anmeldetag: 13.09.2000
(51) Int. Cl.: G01D 5/347, B62D 15/02

(54) **OPTOELEKTRONISCHER DREHWINKELSENSOR**
OPTOELECTRONIC ANGLE OF ROTATION SENSOR
DETECTEUR D'ANGLE DE ROTATION OPTO-ELECTRONIQUE

(30) Priorität: 14.09.1999 DE 19944004
(43) Veröffentlichungstag der Anmeldung: 12.06.2002
(73) Patentinhaber: Leopold Kostal GmbH & Co. KG, 58507 Lüdenscheid (DE)
(72) Erfinder: BLÄSING, Frank, 59457 Werl (DE)
(86) Internationale Anmeldenummer: EP0008930
(87) Internationale Veröffentlichungsnummer: WO01020264

(56) Entgegenhaltungen:
- EP-A- 0 843 159
- DE-A- 4 022 837
- DE-A- 4 228 719
- US-A- 5 886 352

## Beschreibung

Die Erfindung betrifft einen Drehwinkelsensor, etwa einen Lenkwinkelsensor. Insbesondere betrifft die Erfindung einen optoelektronischen Drehwinkelsensor umfassend eine eine analoge Codierung tragende, an die Drehbewegung eines Rotors gekoppelte, beleuchtete Codescheibe und ein aus einer Vielzahl einzelner Wandlerelemente bestehendes bezüglich seiner Längserstreckung quer zur Bewegungsrichtung der Codescheibe angeordnetes Sensorarray zum Abtasten der Codierung der Codescheibe.

Drehwinkelsensoren werden vielfach zur automatischen Positionierung und Messung in Werkzeugmaschinen und Koordinatenmeßgeräten eingesetzt. Darüber hinaus dienen Drehwinkelsensoren im Kraftfahrzeugbereich zum Bestimmen der absoluten Winkelstellung des Lenkrades und werden daher auch als Lenkwinkelsensoren bezeichnet. Der Lenkwinkel wird bei Kraftfahrzeugen benötigt, um mit diesem Wert etwa ein Fahrdynamikregelsystem beaufschlagen zu können. Ein solches Fahrdynamikregelsystem erhält neben dem genannten Lenkwinkelwerten weitere Meßdaten, etwa die Raddrehzahl oder die Drehung des Kraftfahrzeuges um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.

Ein optoelektronischer Lenkwinkelsensor ist beispielsweise aus der DE 40 22 837 A1 bekannt. Der in diesem Dokument beschriebene Lenkwinkelsensor besteht aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluß über die tatsächliche Lenkwinkelstellung gewonnen werden.

Die als Codierung eingesetzte archimedische Spirale ist kontinuierlich verlaufend ausgebildet, so daß diese als analoge Codierung angesprochen werden kann. An einer Erfassung einer Winkelstellung des Lenkrades sind beim Gegenstand dieses Drehwinkelsensors nur ein Bruchteil der in der Sensorzeile zusammengefaßten Wandlerelemente beteiligt, nämlich nur diejenigen, die durch den Lichtschlitz belichtet sind. Die übrigen Wandlerelemente des Sensorarrays sind an der Auswertung der Winkelinformation nur indirekt beteiligt, da die nicht belichteten Wandlerelemente allenfalls die Aussage zulassen, daß sich die Winkelstellung des Lenkrades in diesen, durch die nicht belichteten Wandlerelemente repräsentierten Winkelbereichen nicht befindet. Problematisch ist bei einer solchen Codierung, daß bei einer Verunreinigung der als Lichtschlitz ausgebildeten Codierung, beispielsweise durch ein Haar, in diesem Codebereich eine Lenkwinkeldetektion nicht möglich ist. Durch die Verunreinigung ist die Codierung bereichsweise abgeschattet. Die zur Detektion dieser Winkelstellung zu belichtenden Wandlerelemente bleiben unbelichtet; diese Winkelstellung ist somit nicht definiert.

Ausgehend von diesem diskutierten Stand der Technik liegt der Erfindung daher die Aufgabe zugrunde, einen eingangs genannten gattungsgemäßen optoelektronischen Drehwinkelsensor dergestalt weiterzubilden, daß eine sichere Winkelerfassung auch mit einer zum Teil verunreinigten Codierung möglich ist.
Diese Aufgabe wird erfindungsgemäß dadurch gelöst, daß die auf die photosensitive Oberfläche des Sensorarrays abgebildete Winkelcodierung im wesentlichen alle zum Abtasten der Winkelcodierung vorgesehenen Wandlerelemente des Sensorarrays dergestalt beaufschlagt, daß die mit dem Sensorarray abgetastete Winkelinformation anteilig in jedem, an der Auswertung beteiligten Wandlerelement enthalten ist, wobei als Codierung die Abbildung einer sich in Richtung der Längserstreckung des Sensorarrays erstreckenden und in Bewegungsrichtung der Codescheibe sich zumindest bezüglich der Frequenz ändernden optischen Schwingungsstruktur auf der photosensitiven Oberfläche des Sensorarrays dienst sowie zur Decodierung der von dem Sensorarray erfaßten optischen Information im Hinblick auf die darin enthaltene Winkelinformation eine Frequenz bezogene Analyse der von den Wandlerelementen erfaßten Intensitätssignale vorgesehen ist.

Bei dem erfindungsgemäßen Drehwinkelsensor, der insbesondere auch als Lenkwinkelsensor zum Bestimmen der absoluten Winkelstellung des Lenkrades eines Kraftfahrzeuges geeignet ist, wird im wesentlichen das gesamte durch die Wandlerelemente gebildete Sensorarray zum Erfassen der jeweiligen Winkelinformation eingesetzt. Dabei ist vorgesehen, daß die Winkelinformation anteilig in jedem an der Auswertung der Winkelinformation beteiligten Wandlerelement anteilig enthalten ist. Bei Vorsehen beispielsweise eines Zeilensensors mit 128 Wandlerelementen ist somit die abzutastende Winkelinformation anteilig in jedem dieser Wandlerelemente enthalten. Ist neben einer Winkelcodierung eine zusätzliche Referenzspur auf der Codescheibe enthalten, ist ein Bereich des Sensorarrays für die Abbildung der Referenzspur reserviert. Die winkelbezogene Information wird dann auf die verbleibenden Wandlerelemente des Sensorarrays abgebildet.

Eine Erfassung der Winkelcodierung ist auch dann möglich, wenn einzelne Wandlerelemente etwa in Folge einer Verunreinigung der Codescheibe nicht belichtet sind und somit auch keine anteilige Winkelinformation wiedergeben können, da davon auszugehen ist, daß die Zahl der nicht belichteten Wandlerelemente infolge einer Verunreinigung sehr viel kleiner ist als die Zahl der belichteten. Die Anzahl der belichteten Wandlerelemente ist jedoch ausreichend groß, um die optische Schwingungsstruktur zu rekonstruieren und somit die darin enthaltene Winkelinformation ablesen zu können.

Zur Realisierung dieses Meßprinzips ist bei dem Drehwinkelsensor gemäß der Erfindung vorgesehen, daß als Codierung die Abbildung einer sich in Richtung der Längserstreckung des Sensorarrays ausdehnenden Schwingungsstruktur im Sinne einer optischen Transmissionsmodulation vorgesehen ist. In Bewegungsrichtung der Codescheibe ändert sich kontinuierlich diese optische Schwingungsstruktur bezüglich ihrer Frequenz, so daß in Abhängigkeit von der Änderung der Frequenz eine Winkeldetektion möglich ist. Eine Decodierung der von dem Sensorarray erfaßten, in Form einer optischen Schwingungsstruktur vorliegenden Winkelinformation erfolgt zweckmäßigerweise im Wege einer Frequenzanalyse des über die Gesamtheit aller Wandlerelemente anliegenden Amplitudensignalverlaufs.

Zum Durchführen der Frequenz bezogenen Analyse kann beispielsweise ein Frequenzanalyseglied oder auch ein PLL-Schaltkreis eingesetzt sein. Die Frequenzanalyse selbst kann beispielsweise im Wege einer FourierTransformation erfolgen, so daß im Ergebnis ein Ortsfrequenzspektrum einer bestimmten Rotorstellung zugeordnet werden kann.

In einer bevorzugten Ausgestaltung ist vorgesehen, daß die optische Schwingungsstruktur in jeder Winkelstellung monofrequent ist. Zur Realisierung einer solchen Codierung auf einer Codescheibe kann vorgesehen sein, daß sich die Frequenz der Struktur in Bewegungsrichtung der Codescheibe ändert. Ein Ausführungsbeispiel eines solchen Drehwinkelsensors umfaßt zur Abbildung der Schwingungsstruktur auf dem Sensorarray eine Codescheibe mit in radialer Richtung sinusförmig modulierter Transmission, deren Modulationsfrequenz sich in Bewegungsrichtung kontinuierlich ändert und deren Phasenlage sich gegebenenfalls über den Meßbereich hinweg verändert. Diese auf dem Sensorarray abgebildete Codierung zeigt einen entsprechend der Frequenz kontinuierlichen Wechsel von hellen zu dunklen Bereichen, wobei auch bezüglich der Intensität ein kontinuierlicher Übergang vorgesehen ist. Eine solche optische Schwingungsstruktur kann, wie in einem weiteren Ausbildungsbeispiel vorgesehen auch dadurch realisiert sein, daß die Codierung der Codescheibe als Hell-Dunkel-Streifenmaske ausgebildet ist und daß diese in einem solchen Maße diffus beleuchtet ist, daß sich die Hell-Dunkel-Übergänge der Maske über zahlreiche Wandlerelemente erstrecken, so daß durch diese Übergangsbereiche die Flanken der optischen Schwingung realisiert sind.

Weitere Vorteile und Ausgestaltungen der Erfindung sind Bestandteil der abhängigen Ansprüche sowie der nachfolgenden Beschreibung eines Ausführungsbeispieles unter Bezugnahme auf die beigefügten Figuren. Es zeigen:
- **Fig. 1:**: Eine Codescheibe für einen optoelektronischen Drehwinkelsensor mit einer sich in Längsrichtung eines Sensorarrays erstreckenden optischen Schwingungsstruktur,
- **Fig. 2a:**: der Intensitätsverlauf der auf einen Zeilensensor abgebildeten Codierung in einer Winkelstellung A,
- **Fig. 2b:**: das ermittelte Frequenzspektrum der optischen Schwingungsstruktur des Intensitätsverlaufes der Figur 2a,
- **Fig. 3a**: der Intensitätsverlauf der auf den Zeilensensor abgebildeten Codierung in einer Winkelstellung B,
- **Fig. 3b:**: das ermittelte Frequenzspektrum der optischen Schwingungsstruktur des Intensitätsverlaufes der Figur 3a,
- **Fig. 4a:**: der Intensitätsverlauf der auf den Zeilensensor abgebildeten Codierung in einer Winkelstellung C,
- **Fig. 4b:**: das ermittelte Frequenzspektrum der optischen Schwingungsstruktur des Intensitätsverlaufes der Figur 4a,
- **Fig. 5a:**: der auf den Zeilensensor abbildende Intensitätsverlauf mit einer zum Teil verunreinigten Codierung und
- **Fig. 5b:**: das Frequenzspektrum des Intensitätsverlaufes der Figur 5a.

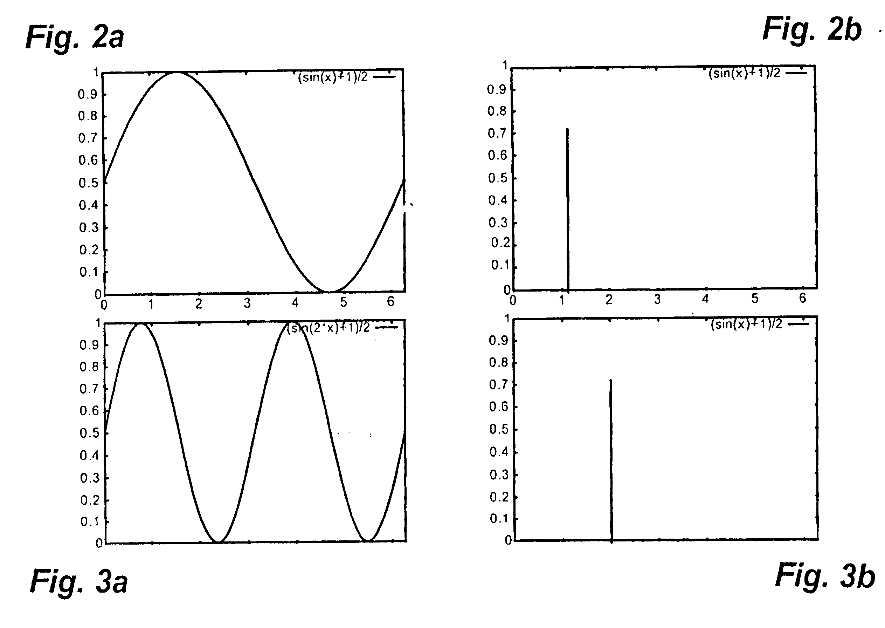

Eine Codescheibe 1 eines optoelektronischen Drehwinkelsensors, beispielsweise eines Lenkwinkelsensors zum Bestimmen der absoluten Winkelstellung des Lenkrades eines Kraftfahrzeuges ist translatorisch zu einem nicht näher dargestellten Rotor entsprechend der Pfeilbewegung bewegbar. Durch beispielsweise einen Gewindetrieb ist die Codescheibe 1 an die Drehbewegung des Rotors gekoppelt. An der einen Seite der Codescheibe 1 ist ein optoelektronisches Sensorarray - ein Zeilensensor 2 - mit seiner Längserstreckung quer zur Bewegungsrichtung der Codescheibe 1 angeordnet. Die Codescheibe 1 weist als Codierung sich quer zur Bewegungsrichtung der Codescheibe 1 erstreckende und in Bewegungsrichtung der Codescheibe 1 ändernde Graukeile auf, die sich auf den photosensitiven Wandlerelementen des Zeilensensors 2 als optische Schwingung durch unterschiedliche Intensitäten erfaßbar sind. Die Graukeile der Codierung sind in der Figur vereinfacht dargestellt, wobei diejenigen Graukeilbereiche, deren Abbildungsintensität unter einer mittleren Intensität liegen gerastert und diejenigen Bereiche, deren Abbildungsintensität größer ist als eine mittlere Intensität nicht gerastert dargestellt sind. Tatsächlich ist die Intensitätsänderung kontinuierlich verlaufend vorgesehen. Der sich auf dem Zeilensensor 2 abbildende Intensitätsverlauf der Codierung der Codescheibe 1, wenn sich die Codescheibe mit der mit dem Buchstaben A gekennzeichneten Querschnittslinie oberhalb des Zeilensensors 2 befindet, ist in Figur 2a wiedergegeben. Der Intensitätsverlauf ist kontinuierlich nach Art einer Sinusschwingung ausgebildet. Diese von dem Zeilensensor 2 in seinen einzelnen Wandlerelementen erfaßten Intensitäten werden durch eine Frequenzanalyse ausgewertet, so daß im Ergebnis ein Frequenzspektrum aus den einzelnen von den Wandlerelementen erfaßten Intensitäten ermittelbar ist. Das Frequenzspektrum der Schwinungsstruktur der Figur 2a ist in Figur 2b gezeigt. Da es sich bei der dargestellten Codierung um eine monofrequente Codierung handelt, ist bei der Frequenzanalyse entsprechend nur ein Frequenzband mit einer hohen Leistungsdichte beaufschlagt.

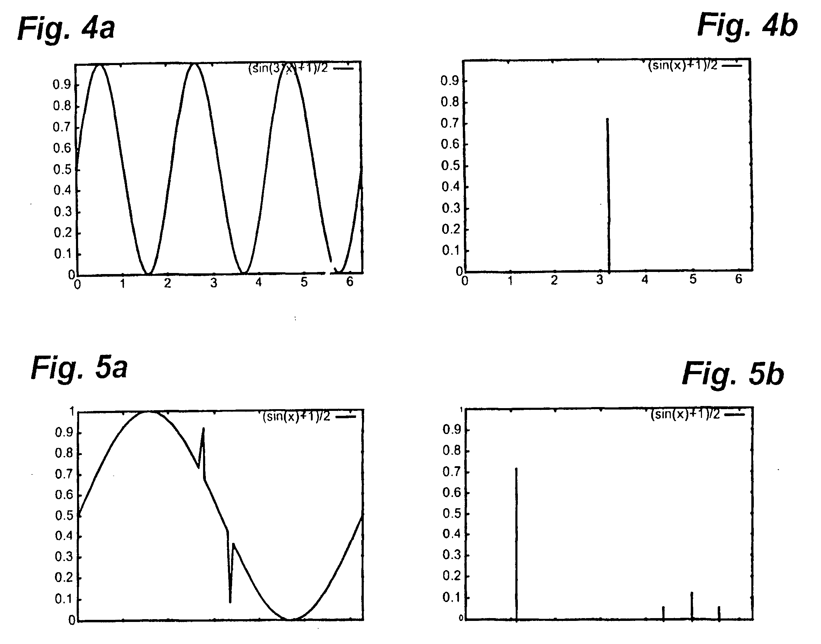

Die in den Figuren 3a und 4a gezeigten Intensitätsverläufe zeigen Positionen, in denen sich die Codescheibe mit den Querschnittslinien B (Figur 3a) bzw. C (Figur 4a) oberhalb des Zeilensensors 2 befindet. Die zu diesen Intensitätsverläufen ermittelten Frequenzspektren sind in den Figuren 3b bzw. 4b wiedergegeben. Bei der dargestellten Codierung ändert sich in Bewegungsrichtung der Codescheibe 1 bezüglich des Zeilensensors 2 die Frequenz der abgebildeten optischen Schwingungsstruktur. Dies erfolgt kontinuierlich, so daß in jeder Stellung der Codescheibe 1 zum Zeilensensor 2 ein unterschiedlicher Intensitätsverlauf und entsprechend durch die zur Decodierung vorgesehene Frequenzanalyse ein unterschiedliches Ergebnis ermittelbar ist.

In Figur 5a ist der Intensitätsverlauf entsprechend der Querschnittslinie A gezeigt, wenn einige Wandlerelemente beispielsweise durch Verunreinigung anders als vorgesehen belichtet werden. Diese Belichtungsfehler machen sich im Intensitätsverlauf durch die beispielsweise gezeigten Peaks bemerkbar. Nach Auswerten dieses Intensitätsverlaufes im Zuge einer Frequenzanalyse stellen sich im Ergebnis mehrere Frequenzen - ein Frequenzsprektrum - dar, wie dies in Figur 5b wiedergegeben ist. Bei der Auswertung ist jedoch bekannt, daß die Codierung der Codescheibe 1 monofrequent ausgebildet ist. Folglich ist bereits aus der Feststellung, daß bei der Ermittlung eines Frequenzspektrums mit mehreren Frequenzen klar ist, daß zumindest teilweise Fehlerspektren mitermittelt worden sind. In eine solche Frequenzanalyse bilden sich die jeweiligen Frequenzspektren in Abhängigkeit von ihrer detektierten Häufigkeit ab. Aus diesem Grunde ist in Figur 5b, auch wenn dort Fehlerspektren ermittelt worden sind, ohne weiteres erkennbar, daß die der Codierung zuzurechnende Frequenz deutlich wie auch bei Figur 2b hervortritt.

Aus der Beschreibung der Erfindung wird deutlich, daß auch bei einer Verunreinigung der Codescheibe eine Drehwinkeldetektion nicht beeinträchtigt ist, zumindest so lange noch mehrheitlich die einzelnen Wandlerelemente des Zeilensensors mit der Intensität der optischen Schwingungsstruktur belichtet werden.

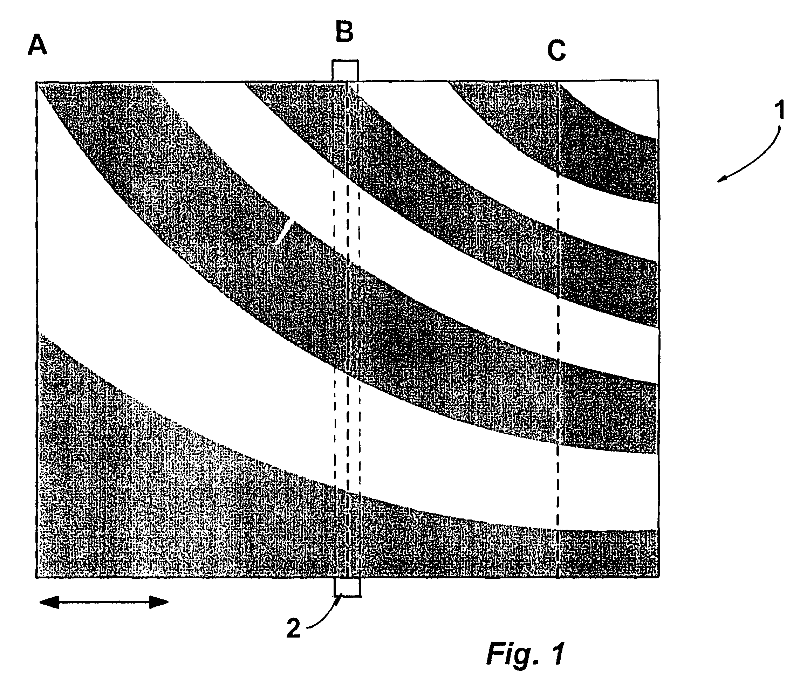

Bei dem dargestellten Ausführungsbeispiel ist der Zeilensensor 2 translatorisch zur der rotatorischen Bewegung des Rotors, beispielsweise der Lenkspindel eines Kraftfahrzeuges bewegt. In einer weiteren, in den Figuren nicht dargestellten Ausgestaltung ist die Codescheibe kreisrund ausgebildet; in diesem Fall stellt die Darstellung der Figur 1 eine Abwicklung der kreisrunden Codescheibe dar, wobei vorgesehen sein kann, daß diese Abwicklung nur einen Abschnitt von 180° darstellt und daß zur Codierung der notwendigen 360° dieser Abschnitt zweimal nebeneinander angeordnet ist. Entsprechend können auch andere Winkelsegmente durch eine solche Codierung gekennzeichnet sein, die sich innerhalb einer Umdrehung (360°) ganzzahlig wiederholen.

Neben der in der Figur 1 dargestellten Codierung kann diese ein oder mehrere Referenzspuren aufweisen, die zur Justage der Codierung und zum Ausgleich von Bewegungstoleranzen bezüglich der Anordnung der Codierung zum Sensorarray dient. Insbesondere bei Vorsehen einer kreisrunden Codescheibe, die unmittelbar an die Drehbewegung des Rotors gekoppelt ist, kann auf diese Weise ein Lagerspiel berücksichtigt werden.

## Patentansprüche

1. Optoelektronischer Drehwinkelsensor umfassend eine eine analoge Codierung tragende, an die Drehbewegung eines Rotors gekoppelte, beleuchtete Codescheibe (1) und ein aus einer Vielzahl einzelner Wandlerelemente bestehendes bezüglich seiner Längserstreckung quer zur Bewegungsrichtung der Codescheibe (2) angeordnetes Sensorarray (2) zum Abtasten der Codierung der Codescheibe (1), **dadurch gekennzeichnet, daß** die auf die photosensitive Oberfläche des Sensorarrays (2) abgebildete Winkelcodierung im wesentlichen alle zum Abtasten der Winkelcodierung vorgesehenen Wandlerelemente des Sensorarrays (2) dergestalt beaufschlagt, daß die mit dem Sensorarray (2) abgetastete Winkelinformation anteilig in jedem an der Auswertung beteiligten Wandlerelement enthalten ist, wobei als Codierung die Abbildung einer sich in Richtung der Längserstreckung des Sensorarrays (2) erstreckenden und in Bewegungsrichtung der Codescheibe (1) sich zumindest bezüglich der Frequenz ändernden optischen Schwingungsstruktur auf der photosensitiven Oberfläche des Sensorarrays (2) dient, sowie zur Decodierung der von dem Sensorarray (2) erfaßten optischen Information im Hinblick auf die darin enthaltene Winkelinformation eine Frequenz bezogene Analyse des von den Wandlerelementen erfaßten Intensitätssignals vorgesehen ist.

2. Drehwinkelsensor nach Anspruch 1, **dadurch gekennzeichnet, daß** die winkelabhängige Struktur in radialer Richtung monofrequent ist.

3. Drehwinkelsensor nach Anspruch 1 oder 2, **dadurch gekennzeichnet, daß** zur Abbildung der Schwingungsstruktur auf dem Sensorarray (2) wechselweise zueinander angeordnete Graukeile als Codierung der Codescheibe (1) vorgesehen sind, deren Dimensionierung sich in Bewegungsrichtung der Codescheibe (1) ändert.

4. Drehwinkelsensor nach Anspruch 1 oder 2, **dadurch gekennzeichnet, daß** zur Abbildung der Schwingungsstruktur auf dem Sensorarray eine diffus beleuchtete Hell-Dunkel-Streifenmaske als Codierung der Codescheibe vorgesehen ist, deren Streifendimensionierung sich in Bewegungsrichtung der Codescheibe ändert.

5. Drehwinkelsensor nach einem der Ansprüche 1 bis 4, **dadurch gekennzeichnet, daß** der Codierung ein oder mehrere Referenzspuren zugeordnet sind.

6. Drehwinkelsensor nach einem der Ansprüche 1 bis 5, **dadurch gekennzeichnet, daß** zum Durchführen der Frequenz bezogenen Analyse ein Frequenzanalyseglied eingesetzt ist.

7. Drehwinkelsensor nach einem der Ansprüche 1 bis 5, **dadurch gekennzeichnet, daß** zum Durchführen der Frequenz bezogenen Analyse ein PLL-Schaltkreis eingesetzt ist.

8. Drehwinkelsensor nach einem der Ansprüche 1 bis 7, **dadurch gekennzeichnet, daß** der Drehwinkelsensor als Lenkwinkelsensor zum Bestimmen der absoluten Winkelstellung des Lenkrades eines Kraftfahrzeuges vorgesehen ist.

## Claims

1. Optoelectronic sensor for angles of rotation comprising an illuminated code disk (1) bearing an analog coding and coupled to the rotational movement of a rotor, as well as a sensor array (2) for scanning the coding on the code disk (1) comprising a great number of individual transducers and arranged with its longitudinal span transverse to the direction of movement of the code disk (2), **characterized by** the fact that the angular coding imaged onto the photosensitive surface of the sensor array is essentially applied to all the transducers of the sensor array (2) provided for scanning the angular coding in such a way that the angular information scanned with the sensor array (2) is proportionally contained in each of the transducers participating in the evaluation, with the image of an optical oscillation structure extending in the direction of the longitudinal span of the sensor array (2) and changing in the direction of movement of the code disk (1) at least in relation to the frequency, serving as the coding on the photosensitive surface of the sensor array (2) and with a frequency-related analysis of the intensity signal acquired by the transducers provided for decoding the optical information acquired by the sensor array (2) with regard to the angular information comprised in the same.

2. Sensor for angles of rotation according to Claim 1, **characterized by** the fact that the angle-dependent structure is monofrequent in the radial direction.

3. Sensor for angles of rotation according to Claim 1 or Claim 2, **characterized by** the fact that grey keys arranged alternately to each other are provided for imaging the oscillation structure onto the sensor array (2) as the coding of the code disk (1), the dimensions of which alter in the direction of movement of the code disk (1).

4. Sensor for angles of rotation according to Claim 1 or Claim 2, **characterized by** the fact that a diffusely illuminated mask with light-dark stripes is provided as the coding of the code disk for imaging the oscillation structure onto the sensor array, with the stripe dimensions of the code disk changing in the direction of movement of the code disk.

5. Sensor for angles of rotation according to any of Claims 1 to 4, **characterized by** the fact that one or more reference tracks are assigned to the coding.

6. Sensor for angles of rotation according to any of Claims 1 to 5, **characterized by the fact** that a frequency analysis element is utilized to conduct the frequency-related analysis.

7. Sensor for angles of rotation according to any of Claims 1 to 5, **characterized by** the fact that a PLL circuit is utilized for conducting the frequency-related analysis.

8. Sensor for angles of rotation according to any of Claims 1 to 7, **characterized by the fact** that the sensor for angles of rotation is provided for determinating the absolute angular position of the steering wheel of a motor vehicle.

## Revendications

1. Capteur d'angle de rotation opto-électronique comprenant un disque de code éclairé (1), qui, couplé au mouvement de rotation d'un rotor, porte un codage analogique, et un réseau capteur (2) composé d'un grand nombre d'éléments transducteurs individuels, disposé, vu dans le sens de sa longueur, transversalement par rapport à la direction du mouvement du disque de code déplacement, et balayant le codage du disque de code (1), **caractérisé en ce que** le codage angulaire, représenté sur la surface photosensible du réseau capteur (2) influence essentiellement tous les éléments transducteurs dudit réseau capteur (2) prévus pour le balayage du codage angulaire, de sorte que l'information angulaire balayée par le réseau capteur (2) est contenue proportionnellement dans chaque élément transducteur participant à l'évaluation, la représentation d'une structure d'oscillation optique, s'étendant dans le sens de la longueur du réseau capteur (2) et changeant dans la direction du mouvement du disque de code (1), tout au moins en ce qui concerne la fréquence, sert de codage sur la surface photosensible du réseau capteur (2), et que pour le décodage de l'information optique, saisie par le réseau capteur (2) en ce qui concerne l'information angulaire y contenue, une Analyse du signal d'intensité saisi par les éléments transducteurs est prévue, laquelle analyse se rapporte à la fréquence.

2. Capteur d'angle de rotation selon la revendication 1, **caractérisé en ce que** la structure dépendant de l'angle est à monofréquence dans le sens radial.

3. Capteur d'angle de rotation selon la revendication 1 ou 2, **caractérisé en ce que**, pour la représentation de la structure d'oscillation sur le réseau capteur (2), des coins neutres, disposés alternativement par rapport les uns aux autres, sont prévus en tant que codage du disque de code (1), leurs dimensions changeant dans la direction du mouvement du disque de code (1).

4. Capteur d'angle de rotation selon la revendication 1 ou 2, **caractérisé en ce que** pour la représentation de la structure d'oscillation sur le réseau capteur (2), un masque à rayures claires-foncées, éclairé de manière diffuse est prévu en tant que codage du disque de code, les dimensions des rayures changeant dans la direction du mouvement du disque de code.

5. Capteur d'angle de rotation selon l'une des revendications 1 à 4, **caractérisé en ce que** une ou plusieurs pistes de référence sont coordonnées au codage.

6. Capteur d'angle de rotation selon l'une des revendications 1 à 5, **caractérisé en ce que,** pour l'exécution de l'analyse se rapportant à la fréquence, un organe d'analyse de fréquence est utilisé.

7. Capteur d'angle de rotation selon l'une des revendications 1 à 5, **caractérisé en ce que**, pour l'exécution de l'analyse se rapportant à la fréquence, un circuit de commutation PLL est utilisé.

8. Capteur d'angle de rotation selon l'une des revendications 1 à 7, **caractérisé en ce que** le capteur d'angle de rotation est prévu en tant que capteur d'angle de braquage pour la détermination de la position angulaire absolue du volant d'un véhicule automobile.
